# EUROPÄISCHE PATENTSCHRIFT

(11) **EP 0 497 140 B1**
(45) Veröffentlichungstag und Bekanntmachung des Hinweises auf die Patenterteilung: **06.04.1994**
(21) Anmeldenummer: 92100571.6
(22) Anmeldetag: 15.01.1992
(51) Int. Cl.: H01S 3/06, H01S 3/16

(54) **Optischer Verstärker**
Optical amplifier
Amplificateur optique

(30) Priorität: 30.01.1991 DE 4102648
(43) Veröffentlichungstag der Anmeldung: 05.08.1992
(73) Patentinhaber: Alcatel SEL Aktiengesellschaft, D-70435 Stuttgart (DE)
(72) Erfinder: Pfeiffer, Thomas, Dr., W-7000 Stuttgart 80 (DE)
(74) Vertreter: Pohl, Herbert, Dipl.-Ing.

(56) Entgegenhaltungen:
- ELECTRONICS LETTERS, Bd. 26, Nr. 8, 12. April 1990, STEVENAGE GB Seiten 532 - 533; J. BOGGIS ET AL.: "Broadband, high sensitivity erbium amplifier receiver for operation over wide wavelength range"
- JOURNAL OF LIGHTWAVE TECHNOLOGY, Bd. 6, Nr. 2, February 1988,NEW YORK,US,Seiten 287 - 293; B.J. AINSLIE ET AL.: "The absorption and fluorescence spectra of rare earth ions in silica-based monomode fiber"
- ELECTRONICS LETTERS, Bd. 22, Nr. 21, 9. Oktober 1986, STEVENAGE GB Seiten 1126 - 1128; M.C. FARRIES ET AL.: "Very high-rejection optical fiber filters"
- APPLIED PHYSICS LETTERS, Bd. 53, Nr. 3, 15.01.90, S. 221-223; Proceedings of Optical Fiber Communication Conference, OPC '90, San Francisco, 1990, Seiten PD 17-1 bis PD 17-2

## Beschreibung

Die Erfindung bezieht sich auf einen optischen Verstärker nach dem Oberbegriff des Patentanspruchs 1.

Optische Verstärker dienen zur Verstärkung von Lichtsignalen, die in Lichtwellenleitern übertragen werden und durch Dämpfung abgeschwächt werden, so daß sie verstärkt werden müssen. Um die Lichtsignale zu verstärken, weisen die optischen Verstärker ein Lichtsignalverstärkungs-Faserstück auf. Das Lichtsignalverstärkungs-Faserstück enthält eine laseraktive Substanz, z.B. eine Erbium-Verbindung, die durch Pumplicht aus einem Laser, z.B. Halbleiterlaser, angeregt wird.

Aus Proc. Optical Fiber Communication Conference OFC '90, San Francisco, 1990, PD 17-1 bis PD 17-4 ist ein solcher optischer Verstärker bekannt, bei dem das Pumplicht die Wellenlänge 980 nm hat. Am Ausgang des Lichtsignalverstärkungs-Faserstücks befindet sich ein polarisations-unempfindlicher optischer Isolator.

Aus Electronics Letters 26 (1990), S. 532 - 533 ist ein faseroptischer Verstärker bekannt, dessen Pumplicht die Wellenlänge 1480 nm hat. Weiterhin ist es daraus bekannt, in einer optischen Übertragungsstrecke, die einen solchen faseroptischen Verstärker enthält, zwischen dem faseroptischen Verstärker und dem optischen Empfänger ein optisches Filter anzuordnen, um das aus dem faseroptischen Verstärker austretende restliche Pumplicht auszufiltern. Das optische Filter ist ein Interferenzfilter.

Aus Electronics Letters 22 (1986), S. 1126 - 1127 ist bekannt, daß optische Absorptionsfilter durch optische Fasern realisiert werden können, die mit seltenen Erden dotiert sind.

Aus Journal of Lightwave Technology, Vol. 6, No. 2, February 1988, S. 287 - S. 292 sind Absorptionsspektren verschiedener Selten-Erd-Ionen, u.a. Ytterbium, in optischen Fasern bekannt.

Es die Aufgabe der Erfindung, einen optischen Verstärker der im Oberbegriff des Patentanspruchs 1 angegeben Art mit einem Filter zu schaffen, das das Pumplicht stark absorbiert, ohne die Lichtsignale zu schwächen.

Die Aufgabe wird wie im Patentanspruch 1 angegeben gelöst. Weiterbildungen ergeben sich aus den Unteransprüchen.

Ein erfindungsgemäßer optischer Verstärker hat den Vorteil, daß das in ihm enthaltene und als Filter dienende Pumplichtabsorptions-Faserstück sich leicht in die Übertragungsstrecke der Lichtsignale einbauen läßt, da es ebenso ein Faserstück ist wie das Lichtsignalverstärkungs-Faserstück. Mit diesem läßt es sich nach dem bekannten Spleiß-Verfahren ebenso verspleißen wie mit dem Lichtwellenleiterkoppler oder mit dem Lichtwellenleiter für die Übertragung der Lichtsignale.

In einer vorteilhaften Weiterbildung der Erfindung sind zwei Pumplichtabsorptions-Faserstücke vorhanden. Dann läßt sich Pumplicht aus zwei Lasern in das Lichtsignalverstärkungs-Faserstück einspeisen. Jedes der beiden Pumplichtabsorptions-Faserstücke erfüllt in diesem Fall zwei Aufgaben: es absorbiert das Pumplicht des einen Lasers in Vorwärtsrichtung und das Pumplicht des anderen, das an einer Stelle mit einem Brechungsindexsprung, z.B. an einer Spleißstelle, zurückfreflektiert worden ist, in Rückwärtsrichtung.

Andere vorteilhafte Weiterbildungen sind den übrigen Patentansprüchen zu entnehmen.

Im folgenden wird die Erfindung anhand von Zeichnungen in Beispielen näher erläutert. Soweit die Erfindung ein Verfahren zum Betreiben des optischen Verstärkers betrifft, wird es im Zusammenhang mit der Beschreibung des optischen Verstärkers erläutert. Es zeigen:
- Fig. 1: einen optischen Verstärker mit einem einzigen Pumplichtabsorptions-Faserstück und
- Fig. 2: einen optischen Verstärker mit zwei Pumplichtabsorptions-Faserstücken.

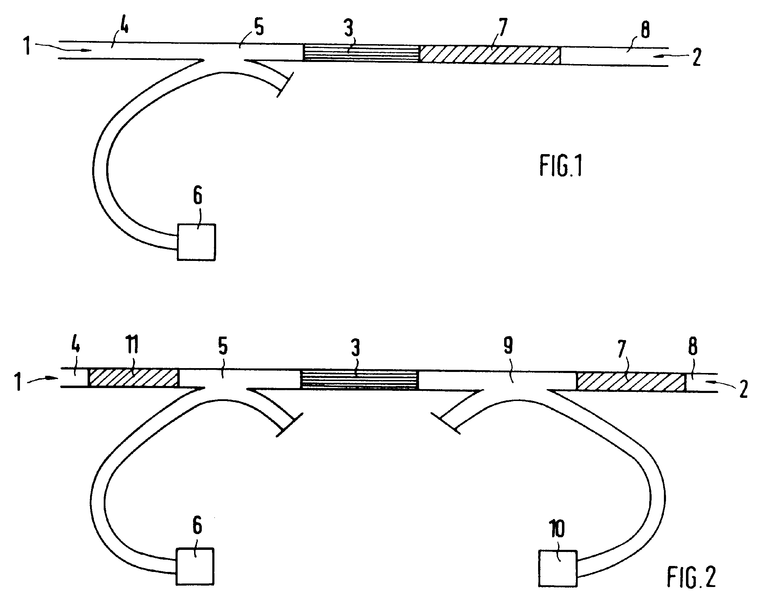

Nachfolgend wird ein optischer Verstärker (Fig. 1) mit einem Eingang 1 und einem Ausgang 2 beschrieben, um einen Hinweis auf die Richtung zu geben, in die Lichtsignale in dem optischen Verstärker übertragen werden.

Selbstverständlich können die Lichtsignale auch in "umgekehrter Richtung" in dem optischen Verstärker übertragen werden. In diesem Fall wird der Eingang 1 zum Ausgang und der Ausgang 2 zum Eingang.

Der optische Verstärker (Fig. 1) weist hinter dem Eingang 1 ein Lichtsignalverstärkungs-Faserstück 3 auf, das beispielsweise eine Erbiumverbindung als laseraktive Substanz enthält. Zwischen dem Eingang 1 und dem Lichtsignalverstärkungs-Faserstück 3 durchlaufen die Lichtsignale einen ersten Lichtwellenleiter 4 und einen Lichtwellenleiterkoppler 5. Das Lichtsignalverstärkungs-Faserstück 3 ist mit dem Lichtwellenleiterkoppler 5 verspleißt. Um eine besonders hohe optische Verstärkung der Lichtsignale zu erreichen, ist es von Vorteil, wenn sein Kern einen kleineren Querschnitt aufweist als der Kern des Lichtwellenleiterkopplers 5. Aufgrund denen hat das Lichtsignalverstärkungs-Faserstück 3 insgesamt einen kleineren Querschnitt als der Lichtwellenleiterkoppler 5. Dieser verbindet das Lichtsignalverstärkungs-Faserstück 3 mit einem Laser 6, der vorzugsweise ein Halbleiterlaser ist, z.B. ein InGaAs/AlGaAs-Laser, der Pumplicht mit einer Wellenlänge aus dem Wellenlängenbereich von 960 - 1000 nm emittiert.

In Lichtausbreitungsrichtung hinter dem Lichtsignalverstärkungs-Faserstück 3 ist an dieses ein Pumplichtabsorptions-Faserstück 7 angespleißt. Es enthält eine Ytterbium (Yb³⁺)-Verbindung, die in dem Wellenlängenbereich von 900 - 1050 nm, d.h. in dem Wellenlängenbereich des Pumplichts, stark absorbiert. Dabei findet eine Anregung von dem Energieniveau ²F_{7/2} auf das Energieniveau ²F_{5/2} statt.

Hinter dem Pumplichtabsorptions-Faserstück 7 schließt sich ein zweiter Lichtwellenleiter 8 an, den die Lichtsignale durch den Ausgang 2 verlassen. Gemäß dem anhand von Fig. 1 erläuterten optischen Verstärker hat das Pumplichtabsorptions-Faserstück 7 den gleichen Querschnitt wie der Lichtwellenleiter 8, der sich an es anschließt.

Das Pumplichtabsorptions-Faserstück 7 kann aber auch den gleichen Querschnitt wie das Lichtsignalverstärkungs-Faserstück 3 haben.

Gemäß einer Weiterbildung, die anhand von Fig. 2 erläutert wird, ist außer den bereits in Fig. 1 enthaltenen Bestandteilen ein weiterer Lichtwellenleiterkoppler 9 vorhanden, der zwischen dem Lichtsignalverstärkungs-Faserstück 3 und dem Pumplichtabsorptions-Faserstück 7 angeordnet ist. Über ihn wird aus einem Laser 10 kommendes Pumplicht entgegengesetzt zur Richtung des aus dem Laser 6 kommenden Pumplichts zwischen dem Lichtwellenleiter 4 und dem Lichtwellenleiterkoppler 5 in das Lichtsignalverstärkungs-Faserstück 3 eingespeist. Der Laser 10 ist vorzugsweise genauso aufgebaut wie der Laser 6.

Daher ist ein weiteres Pumplichtabsorptions-Faserstück 11 vorhanden, durch das das aus dem Laser 10 kommende Pumplicht im wesentlichen absorbiert wird. Ein geringer Anteil dieses Pumplichts wird an den Grenzflächen zwischen dem Pumplichtabsorptions-Faserstück 11, den Lichtwellenleiterkopplern 5, 9 und dem Lichtsignalverstärkungs-Faserstück 3 reflektiert und gelangt in das Pumplichtabsorptions-Faserstück 7, wo es dann absorbiert wird.

Entsprechend wird ein geringer Anteil des aus dem Laser 6 kommenden Pumplichts an den Grenzflächen zwischen dem Pumplichtabsorptions-Faserstück 7, den Lichtwellenleiterkopplern 5, 9 und dem Lichtsignalverstärkungs-Faserstück 3 reflektiert und gelangt in das Pumplichtabsorptions-Faserstück 11, wo es dann absorbiert wird.

Das Pumplichtabsorptions-Faserstück 7 hat vorzugsweise den gleichen Querschnitt wie der an es angrenzende Lichtwellenleiter 8 und optische Koppler 9.

Das Pumplichtabsorptions-Faserstück 11 hat vorzugsweise den gleichen Querschnitt wie der an es angrenzende Lichtwellenleiter 4 und optische Koppler 5. Auf diese Weise lassen sich die Pumplichtabsorptions-Faserstücke 7, 11 einfach mit den Lichtwellenleitern 4, 8 und den Lichtwellenleiterkopplern 5, 9 verspleißen.

Auch für den optischen Verstärker gemäß Fig. 2 gilt, daß die Lichtsignale in beiden Richtungen in dem Richtsignalverstärkungs-Faserstück 3 den Lichtwellenleiterkopplern 5, 9 und den Lichtwellenleitern 4, 8 übertragen werden können.

## Patentansprüche

1. Optischer Verstärker zur Verstärkung von Lichtsignalen, bei dem hinter einem Lichtwellenleiterkoppler (5) zur Einkopplung von Pumplicht im Wellenlängenbereich von 900 bis 1050 nm ein Erbium-dotiertes Lichtsignalverstärkungs-Faserstück (3) angeordnet ist, in dem die Lichtsignale durch das Pumplicht verstärkbar sind, **dadurch gekennzeichnet,** daß hinter dem Lichtverstärkungs-Faserstück (3) ein Pumplichtabsorptions-Faserstück (7), das Ytterbium enthält, als ein Filter zur Absorption des Pumplichts angeordnet ist.

2. Optischer Verstärker nach Anspruch 1, dadurch gekennzeichnet, daß vor dem Pumplichtabsorptions-Faserstück (7) ein weiterer Lichtwellenleiterkoppler (9) zur Einkopplung eines weiteren Pumplichts von 900 - 1050 nm in das Lichtsignalverstärkungs-Faserstück (3) und vor dem ersten Lichtwellenleiterkoppler (5) ein weiteres Ytterbium enthaltendes Pumplichtabsorptions-Faserstück (11) und zwischen dem Lichtsignalverstärkungs-Faserstück (3) angeordnet sind.

3. Optischer Verstärker nach Anspruch 1, dadurch gekennzeichnet, daß das Pumplichtabsorptions-Faserstück (7) den gleichen Querschnitt hat wie das Lichtsignalverstärkungs-Faserstück (3).

4. Optischer Verstärker nach Anspruch 1, dadurch gekennzeichnet, daß das Pumplichtabsorptions-Faserstück (7) den gleichen Querschnitt hat wie ein Lichtwellenleiter (8), der hinter dem Pumplichtabsorptions-Faserstück (7) angeordnet ist.

5. Optischer Verstärker nach Anspruch 2, dadurch gekennzeichnet, daß die Pumplichtabsorptions-Faserstücke (7, 11) den gleichen Querschnitt haben wie an sie angrenzende Lichtwellenleiter (4, 8) und die an sie angrenzenden Lichtwellenleiterkoppler (5, 9).

## Claims

1. An optical amplifier for amplifying light signals wherein a fiber-optic coupler (5) for coupling in a pump light in the wavelength range of 900 - 1050 nm is followed by an erbium-doped light-signal-amplifying length of fiber (3) in which the light signals are amplifiable by the pump light, characterized in that the light-signal-amplifying length of fiber (3) is followed by a pump-light-absorbing length of fiber (7), containing ytterbium, as a filter for absorption of the pump light.

2. An optical amplifier as claimed in claim 1, characterized in that the pump-light-absorbing length of fiber (7) is preceded by another fiber-optic coupler (9) for coupling another pump light with a wavelength of 900 - 1050 nm into the light-signal-amplifying length of fiber (3) and, before the first fiber-optic coupler (5) there is disposed another ytterbium-containing pump-light-absorbing length of fiber (11) and between the light-signal-amplifying length of fiber (3).

3. An improved optical amplifier as claimed in claim 1, wherein the pump-light-absorbing length of fiber (7) has the same cross-section as the light-signal-amplifying length of fiber (3).

4. An improved optical amplifier as claimed in claim 1, wherein the pump-light-absorbing length of fiber (7) has the same cross-section as an optical waveguide (8) disposed behind the pump-light-absorbing length of fiber (7).

5. An improved optical amplifier as claimed in claim 2, wherein the pump-light-absorbing lengths of fiber (7, 11) have the same cross-section as the adjoining optical waveguides (4, 8) and the adjoining fiber-optic couplers (5, 9).

## Revendications

1. Amplificateur optique pour amplification de signaux lumineux, dans le cas duquel, derrière un coupleur de guides d'ondes lumineuses (5) est disposé, pour l'introduction de lumière produite par pompage optique sur la plage des longueurs d'ondes de 900 à 1050 nm, un élément de fibre (3), pour amplification du signal lumineux, dopé à l'erbium, dans lequel les signaux lumineux peuvent être amplifiés par la lumière produite par pompage optique,
amplificateur caractérisé par le fait que derrière l'élément de fibre (3) pour amplification de la lumière est disposé, en tant que filtre pour l'absorption de la lumière produite par pompage optique, un élément de fibre (7), pour absorption de la lumière produite par pompage optique, qui contient de l'ytterbium.

2. Amplificateur optique selon la revendication 1, caractérisé par le fait qu'en avant de l'élément de fibre (7) pour absorption de la lumière produite par pompage optique est disposé un autre coupleur de guide d'ondes lumineuses (9) pour introduire dans l'élément de fibre (3) pour amplification du signal lumineux une autre lumière, produite par pompage optique, de longueur d'onde 900 - 1050 nm, et qu'en avant du premier coupleur de guides d'ondes lumineuses (5) est disposé un autre élément de fibre (11) pour absorption de la lumière produite par pompage optique, élément contenant de l'ytterbium et entre l'élément de fibre (3) pour amplification du signal lumineux.

3. Amplificateur optique selon la revendication 1, caractérisé par le fait que l'élément de fibre (7) pour absorption de la lumière produite par pompage optique a la même section que l'élément de fibre (3) pour amplification du signal lumineux.

4. Amplificateur optique selon la revendication 1, caractérisé par le fait que l'élément de fibre (7) pour absorption de la lumière produite par pompage optique a la même section qu'un conducteur d'ondes lumineuses (8) disposé derrière l'élément de fibre (7) pour absorption de la lumière produite par pompage optique.

5. Amplificateur optique selon la revendication 2, caractérisé par le fait que les éléments de fibre (7, 11) pour absorption de la lumière produite par pompage optique ont la même section que les guides d'ondes lumineuses (4, 8) qui les jouxtent et que les coupleurs de guides d'ondes lumineuses (5, 9) qui les jouxtent.
